(19) **Europäisches Patentamt**
**European Patent Office**
**Office européen des brevets**

(11) **EP 3 073 348 A1**

(12) **EUROPEAN PATENT APPLICATION**

(43) Date of publication:
28.09.2016 Bulletin 2016/39

(51) Int Cl.:
***G05D 23/19*** *(2006.01)*

(21) Application number: 16162044.8

(22) Date of filing: 23.03.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 27.03.2015 JP 2015067108

(71) Applicant: **MITSUBISHI HEAVY INDUSTRIES, LTD.**
**Tokyo (JP)**

(72) Inventors:
• **TAKEDA, Takeshi**
**MINATO-KU, TOKYO (JP)**
• **MURAKAMI, Kenichi**
**MINATO-KU, TOKYO (JP)**
• **IKEDA, Masaki**
**MINATO-KU, TOKYO (JP)**
• **SATO, Hitonobu**
**NAGOYA-SHI, AICHI-KEN (JP)**

(74) Representative: **Intès, Didier Gérard André et al**
**Cabinet Beau de Loménie**
**158 rue de l'Université**
**75340 Paris Cedex 07 (FR)**

(54) **CONTROL VALUE CALCULATION DEVICE, CONTROL VALUE CALCULATION METHOD, AND PROGRAM**

(57) A control value calculation device includes a heat balance equation calculating unit and a control value calculating unit. The heat balance equation calculating unit calculates a heat balance equation based on a plurality of relational expressions, the relational expressions respectively corresponding to different timings, the relational expressions showing correspondence relationships between a load with respect to a temperature control device in a compartment, a capacity of the temperature control device, and change in a temperature in the compartment by the temperature control unit, the heat balance equation showing balance when the tempera-ture control device performs heat exchange in the compartment, the heat balance equation showing being expressed by a relationships between a control value of the temperature control device, a target value of the temperature in the compartment, a value of a temperature outside the compartment, and a constant specified based on the relational expressions. The control value calculating unit calculates the control value of the temperature control device based on the heat balance equation and a current target value of the temperature in the compartment.

FIG. 1

EP 3 073 348 A1

**Description**

BACKGROUND OF THE INVENTION

Field of the Invention

The present invention relates to a control value calculation device, a control value calculation method, and a program.

Description of Related Art

There is a system that cools or heats multiple showcases using a heat exchanger to adjust internal temperatures of the showcases to a predetermined temperature.

A related technique is disclosed in Japanese Unexamined Patent Application, First Publication No. 2003-83660 (hereinafter, referred to as Patent Literature 1). The device disclosed in Patent Literature 1 is a showcase cooling device that controls the rotational speed of a compressor based on a difference between a predetermined target suction pressure and the suction pressure of the compressor, in which an operation of correcting the target suction pressure is performed based on a difference between a predetermined suction pressure value in a predetermined range and the average value of actual suction pressures per unit of operation.

In a system in which plural showcases are cooled or heated by a heat exchanger and internal temperatures of the showcases are adjusted to desired temperatures, it is desirable to operate a compressor so that a target low pressure becomes as high as possible with respect to change in load to achieve energy saving with high efficiency.

SUMMARY OF THE INVENTION

An object of the invention is to provide a control value calculation device, a control value calculation method, and a program capable of solving the above problem.

According to a first aspect of the invention, there is provided a control value calculation device including: a heat balance equation calculating unit that calculates, based on respective relational expressions of correspondence relationships between respective values of a load with respect to a temperature control device in a refrigerator compartment, a capacity of the temperature control device, and change in internal temperature based on the temperature control device at different timings, a heat balance equation when the temperature control device performs heat exchange in the refrigerator compartment, expressed by a control value of the temperature control device, a target temperature in the refrigerator compartment, a temperature outside the refrigerator compartment, and a constant specified based on the plurality of relational expressions; and a control value calculating unit that calculates the control value of the temperature control device based on the heat balance equation and a current target temperature in the refrigerator compartment.

According to a second aspect of the invention, in the control value calculation device according to the first aspect of the invention, the temperature control device may be a refrigerator, and the control value may be a target low pressure for determining a pressure of a refrigerant in an evaporator of the refrigerator.

According to a third aspect of the invention, in the control value calculation device according to the first or second aspect of the invention, the heat balance equation calculating unit may calculate, based on the respective relational expressions of the correspondence relationships between the respective values of the load, the capacity, and the change in internal temperature at the different timings, and based on the heat balance equation, a load coefficient indicating the load per unit time, an inside-generated load, a capacity coefficient indicating the capacity per unit temperature, and a heat capacity coefficient indicating a heat capacity per unit temperature, which are to be included in the relational expressions.

According to a fourth aspect of the invention, the control value calculation device according to any one of the first to third aspects of the invention may further include: a maximum load specifying unit that specifies, when the temperature control device controls each of the plurality of refrigerator compartments, the load in a refrigerator compartment having the heaviest load, and the control value calculating unit may calculate the control value with respect to the load in the refrigerator compartment having the heaviest load specified by the maximum load specifying unit.

According to a fifth aspect of the invention, the control value calculation device according to the fourth aspect of the invention may further include: a correction air volume calculating unit that determines, based on a difference between the load in the refrigerator compartment having the heaviest load specified by the maximum load specifying unit and a load in a different refrigerator compartment, the rotational speed of a fan in the different refrigerator compartment.

According to a sixth aspect of the invention, there is provided a control value calculation method including: calculating, based on respective relational expressions of correspondence relationships between respective values of a load with respect to a temperature control device in a refrigerator compartment, a capacity of the temperature control device, and change in internal temperature based on the temperature control device at different timings, a heat balance equation when the temperature control device performs heat exchange in the refrigerator compartment, expressed by a control value of the temperature control device, a target temperature in the refrigerator compartment, a temperature outside the refrigerator compartment, and a constant specified based on the plurality of relational expressions, by a heat balance equation calculating unit; and calculating the control value of the temperature control device based on the heat balance equation and a current target temperature in the refrigerator compartment, by a control value calculating unit.

According to a seventh aspect of the invention, there is provided a program that causes a computer to function as: heat balance equation calculation means for calculating, based on respective relational expressions of correspondence relationships between respective values of a load with respect to a temperature control device in a refrigerator compartment, a capacity of the temperature control device, and change in internal temperature based on the temperature control device at different timings, a heat balance equation when the temperature control device performs heat exchange in the refrigerator compartment, expressed by a control value of the temperature control device, a target temperature in the refrigerator compartment, a temperature outside the refrigerator compartment, a constant specified based on the plurality of relational expressions; and control value calculation means for calculating the control value of the temperature control device based on the heat balance equation and a current target temperature in the refrigerator compartment.

According to the control value calculation device, the control value calculation method and the program described above, it is possible to determine an optimal target pressure with respect to change in load.

BRIEF DESCRIPTION OF THE DRAWINGS

FIG. 1 is a diagram illustrating a configuration of a refrigeration system according to a first embodiment of the invention.
FIG. 2 is a diagram illustrating a data table according to the first embodiment of the invention.
FIG. 3 is a diagram illustrating a processing flow of a control value calculation device according to the first embodiment of the invention.
FIG. 4 is a diagram illustrating a configuration of a refrigeration system according to a second embodiment of the invention.

EMBODIMENTS FOR CARRYING OUT THE INVENTION

First embodiment

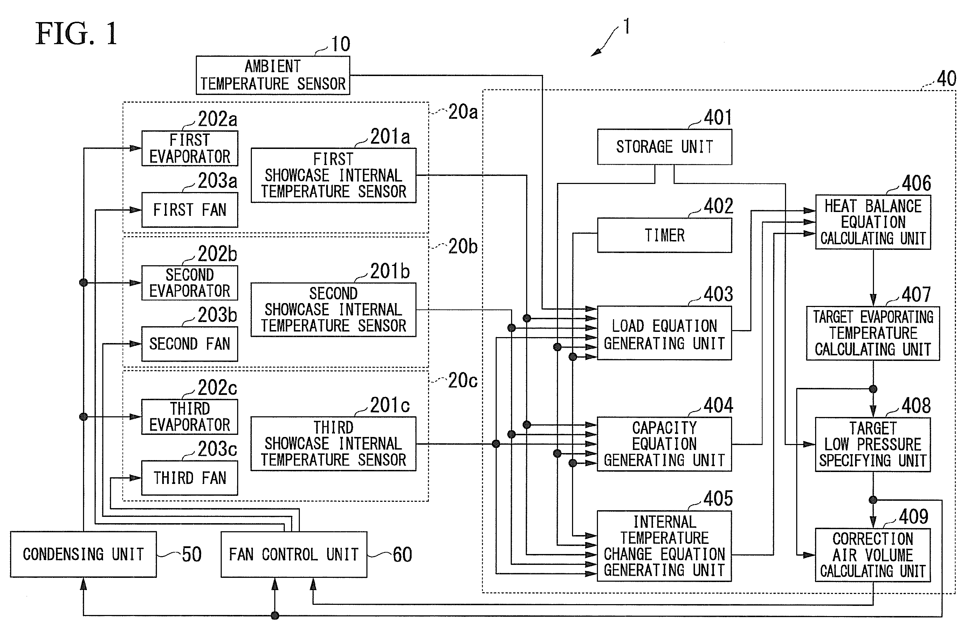

Hereinafter, embodiments of the invention will be described with reference to the accompanying drawings.
A configuration of a refrigeration system 1 that includes a control value calculation device 40 according to a first embodiment of the invention will be described.
The refrigeration system 1 according to this embodiment includes an ambient temperature sensor 10, a first showcase 20a (temperature control device), a second showcase 20b (temperature control device), a third showcase 20c (temperature control device), a control value calculation device 40, a condensing unit 50, and a fan control unit 60, as shown in FIG. 1.
The ambient temperature sensor 10 detects ambient temperatures $T_a$ of the first showcase 20a, the second showcase 20b, and the third showcase 20c.
The first showcase 20a includes a first showcase internal temperature sensor 201a, a first evaporator 202a (heat exchanger), and a first fan 203a.
The first showcase internal temperature sensor 201a detects an internal temperature $T_r1$ inside the first showcase 20a.
The first evaporator 202a lowers the temperature inside the first showcase 20a based on the control of the condensing unit 50. The first evaporator 202a is a device that performs cooling by taking heat from the periphery when a refrigerant liquid is evaporated.
The first fan 203a sends air cooled by the first evaporator 202a into a compartment of a refrigerator.
Here, the first showcase 20a functions as a refrigerator.
The second showcase 20b includes a second showcase internal temperature sensor 201b, a second evaporator 202b (heat exchanger), and a second fan 203b.
The second showcase internal temperature sensor 201b detects an internal temperature $T_r2$ inside the second showcase 20b.
The second evaporator 202b lowers the temperature inside the second showcase 20b based on the control of the condensing unit 50. The second evaporator 202b is a device that performs cooling by taking heat from the periphery when a refrigerant liquid is evaporated.

The second fan 203b sends air cooled by the second evaporator 202b into a compartment of a refrigerator.

Here, the second showcase 20b functions as a refrigerator.

The third showcase 20c includes a third showcase internal temperature sensor201c, a third evaporator 202c (heat exchanger), and a third fan 203c.

The third showcase internal temperature sensor 201c detects an internal temperature $T_r3$ inside the third showcase 20c.

The third evaporator 202c lowers the temperature inside the third showcase 20c based on the control of the condensing unit 50. The third evaporator 202c is a device that performs cooling by taking heat from the periphery when a refrigerant liquid is evaporated.

The third fan 203c sends air cooled by the third evaporator 202c into a compartment of a refrigerator.

Here, the third showcase 20c functions as a refrigerator.

The control value calculation device 40 includes a storage unit 401, a timer 402, a load equation generating unit 403, a capacity equation generating unit 404, an internal temperature change equation generating unit 405, a heat balance equation calculating unit 406, a target evaporating temperature calculating unit 407 (target temperature calculating unit), a target low pressure specifying unit 408 (control value calculating unit), and a correction air volume calculating unit 409.

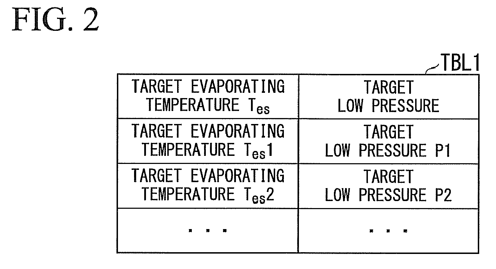

The storage unit 401 stores a variety of information necessary for a process performed by the control value calculation device 40. For example, the storage unit 401 stores a data table TBL1 indicating correspondence relationships between target evaporating temperatures $t_{es}$ (target temperatures) and target low pressures (control values) as shown in FIG. 2. The target evaporating temperature is a target value of a cooling temperature in each of the first evaporator 202a, the second evaporator 202b, and the third evaporator 202c. The target low pressure is a target value of a pressure of a refrigerant output from a compressor so as to appropriately adjust the pressure of the refrigerant in each of the first evaporator 202a, the second evaporator 202b, and the third evaporator 202c. In the data table TBL1 shown in FIG. 2, a target evaporating temperature $T_{es}1$ is associated with a target low pressure P1. In the data table TBL1 shown in FIG. 2, a target evaporating temperature $T_{es}2$ is associated with a target low pressure P2.

Further, the storage unit 401 stores values of target internal temperatures $T_{rs}$, initial values of target evaporating temperatures $T_{es}$, and initial values of air volumes v, respectively. The initial values of the target evaporating temperatures $T_{es}$ are equal to each other with respect to the respective evaporators of the first evaporator 202a, the second evaporator 202b, and the third evaporator 202c. The initial values of the air volumes v are equal to each other with respect to the respective evaporators of the first evaporator 202a, the second evaporator 202b, and the third evaporator 202c.

Further, the storage unit 401 stores the following Equations (1) to (5).

$$\text{Load} = L \times (T_a - T_r) + H \qquad \ldots (1)$$

$$\text{Capacity} = Q \times v \times (T_r - T_e) \quad \ldots (2)$$

$$\text{Change in internal temperature} = \{M \times (T_r2 - T_r1)\}/\Delta t \ \ldots (3)$$

$$\text{Load} - \text{Capacity} = \text{Change in internal temperature} \quad \ldots (4)$$

$$L \times (T_a - T_r) + H = Q \times v \times (T_{rs} - T_{es}) \qquad \ldots (5)$$

Expression (1) represents an equation indicating a load. Expression (2) represents an equation indicating a capacity. Expression (3) represents an equation indicating a heat quantity change due to change in internal temperature. Expression (4) represents an equation indicating a heat balance. Expression (5) represents an equation for calculating a target evaporating temperature.

The timer 402 specifies a time. The timer 402 specifies an elapsed time from a reference.

The load equation generating unit 403 generates an equation indicating a cooling temperature to be secured per unit time in each of the first showcase 20a, the second showcase 20b, and the third showcase 20c, that is, indicating a load.

The capacity equation generating unit 404 generates an equation indicating a cooling temperature capable of being secured per unit time in each of the first showcase 20a, the second showcase 20b, and the third showcase 20c, that is, indicating a capacity.

The internal temperature change equation generating unit 405 generates an equation indicating change in temperature in each of the first showcase 20a, the second showcase 20b, and the third showcase 20c, that is, indicating change in internal temperature.

The heat balance equation calculating unit 406 calculates a load coefficient L, an inside-generated load H, a capacity coefficient per air volume Q, and a heat capacity coefficient M, respectively, based on the load calculated by the load equation generating unit 403, the capacity calculated by the capacity equation generating unit 404, the change in internal temperature calculated by the internal temperature change equation generating unit 405, and the calculation equation indicating the heat balance. The calculation equation indicating the heat balance is "load-capacity=change in internal temperature". For example, the heat balance calculating unit 406 generates four heat balance equations indicating the heat balance at four different timings based on the timer 402 (four timings with a predetermined time interval based on the timer 402). Further, the heat balance equation calculating unit 406 solves simultaneous equations of the four equations to calculate the load coefficient L, the inside-generated load H, the capacity coefficient per air volume Q, and the heat capacity coefficient M, respectively.

The load coefficient L is a coefficient indicating the load per unit time. Further, the inside-generated load H is a load generated in the refrigeration system 1. For example, the inside-generated load H is change in temperature per unit time due to heat generated when each of the first fan 203a, the second fan 203b, and the third fan 203c is operated. Further, for example, the inside-generated load H is change in temperature per unit time due to heat generated by lighting of each of the first showcase 20a, the second showcase 20b, and the third showcase 20c. The capacity coefficient per air volume Q is a coefficient indicating a capacity per unit temperature. The heat capacity coefficient M is a coefficient indicating a heat capacity per unit temperature.

The target evaporating temperature calculating unit 407 calculates a load with respect to each of the first showcase 20a, the second showcase 20b, and the third showcase 20c based on the respective input values of the load coefficient L, the inside-generated load H, the capacity coefficient per air volume Q, and the heat capacity coefficient M. The target evaporating temperature calculating unit 407 (maximum load specifying unit) specifies a maximum load among the calculated loads. The target evaporating temperature calculating unit 407 calculates a target evaporating temperature $T_{es}$ based on the respective values of the load coefficient L, the inside-generated load H, the capacity coefficient per air volume Q, and the heat capacity coefficient M corresponding to the specified maximum load.

The target low pressure specifying unit 408 specifies a target low pressure based on the target evaporating temperature $T_{es}$ calculated by the target evaporating temperature calculating unit 407. For example, the target low pressure specifying unit 408 substitutes the target evaporating temperature $T_{es}$ in a relational expression indicating a relationship between the target evaporating temperature $T_{es}$ and the target low pressure to calculate the target low pressure. Further, for example, the target low pressure specifying unit 408 specifies a target evaporating temperature that matches the target evaporating temperature $T_{es}$ calculated by the target evaporating temperature calculating unit 407 in the data table TBL1 indicating the correspondence relationship between the target evaporating temperature $T_{es}$ and the target low pressure stored in the storage unit 401.

The correction air volume calculating unit 409 calculates, when the first evaporator 202a, the second evaporator 202b, and the third evaporator 202c are controlled by the condensing unit 50, a correction value to be used by the fan control unit 60 so that an evaporator which is in an excessive cooling state enters an appropriate cooling state based on the target pressure specified by the target low pressure specifying unit 408.

In the refrigeration system 1, the heat balance equation calculating unit 406 calculates the load coefficient L, the inside-generated load H, the capacity coefficient per air volume Q, and the head capacity coefficient M, respectively, at a predetermined time interval. The target evaporating temperature calculating unit 407 calculates a target evaporating temperature based on the load coefficient L, the inside-generated load H, the capacity coefficient per air volume Q, and the heat capacity coefficient M calculated by the heat balance equation calculating unit 406. The target low pressure specifying unit 408 specifies a target low pressure based on the target evaporating temperature $T_{es}$ calculated by the target evaporating temperature calculating unit 407. When the first evaporator 202a, the second evaporator 202b, and the third evaporator 202c are controlled by the condensing unit 50, the correction air volume calculating unit 409 calculates a correction value to be used by the fan control unit 60 so that the evaporator which is in an excessive cooling state enters an appropriate cooling state based on the target low pressure specified by the target low pressure specifying unit 408.

Next, a process of the refrigeration system 1 according to this embodiment will be described.

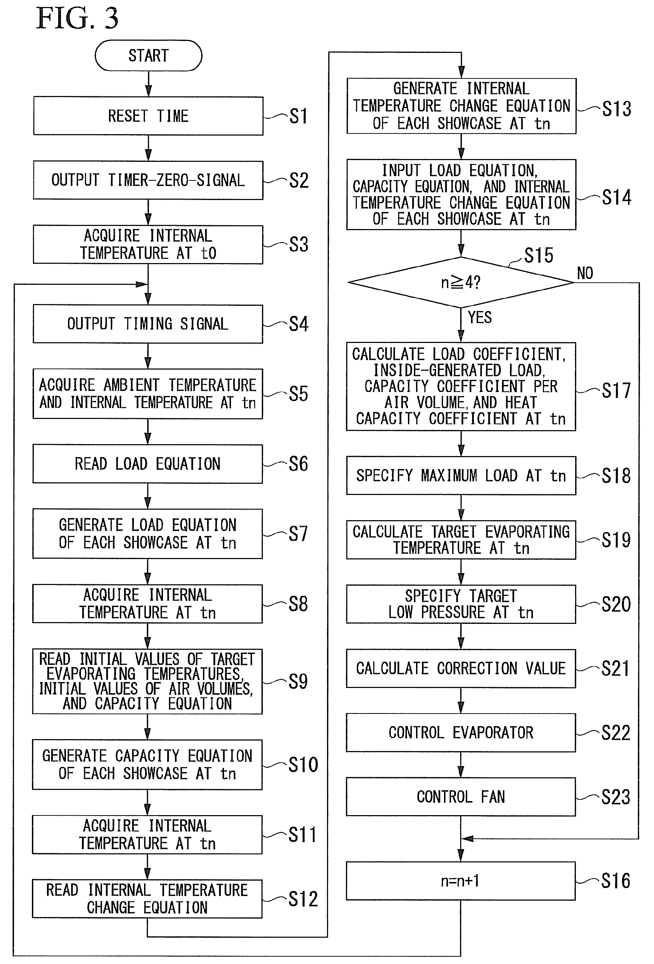

Here, in the refrigeration system 1 according to this embodiment, a processing flow of FIG. 3 indicating a process performed by the control value calculation device 40 will be described.

In the refrigeration system 1, the ambient temperature sensor 10 constantly detects ambient temperatures $T_a$ of the first showcase 20a, the second showcase 20b, and the third showcase 20c. The first showcase internal temperature sensor 201a constantly detects a temperature $T_r1$ inside the first showcase 20a. The second showcase internal temperature sensor 201b constantly detects a temperature $T_r2$ inside the second showcase 20b. The third showcase internal temperature sensor 201c constantly detects a temperature $T_r3$ inside the third showcase 20c.

The timer 402 resets a time to generate a reference timing t0 (reference time) (step S1). For example, when the time is specified based on the number of counts of the counter, the timer 402 sets the number of counts of the counter to zero. Here, the timer 402 outputs a timer-zero-signal to each of the load equation generating unit 403, the capacity equation generating unit 404, and the internal temperature change equation generating unit 405 (step S2).

If the timer-zero-signal receives, from the timer 402, the internal temperature change equation generating unit 405 acquires each of an internal temperature $T_r10$ from the first showcase internal temperature sensor 201a, an internal temperature $T_r20$ from the second showcase internal temperature sensor 201b, and an internal temperature $T_r30$ from the third showcase internal temperature sensor 201c, at the timing t0 when the timer-zero-signal is input (step S3).

The timer 402 outputs a timing signal for notifying a timing $tn=t0+n\times\Delta t$ (n=1, 2, 3, ..., that is, a timing t1, t2, t3, ... ) after a predetermined time $\Delta t$ elapses to each of the load equation generating unit 403, the capacity equation generating unit 404, and the internal temperature change equation generating unit 405 (step S4).

If the timing signal is input from the timer 402, the load equation generating unit 403 acquires each of an ambient temperature $T_a$ from the ambient temperature sensor 10, an internal temperature $T_r1n$ (an internal temperature $T_r11$ when n is 1) from the first showcase internal temperature sensor 201a, an internal temperature $T_r2n$ (an internal temperature $T_r21$ when n is 1) from the second showcase internal temperature sensor 201b, and an internal temperature $T_r3n$ (an internal temperature $T_r31$ when n is 1) from the third showcase internal temperature sensor 201c at a timing tn (for example, a timing t1 when n is 1) when the timing signal is input (step S5). The load equation generating unit 403 reads Expression (1) from the storage unit 401 (step S6).

The load equation generating unit 403 generates an equation indicating a load with respect to each of the first showcase 20a, the second showcase 20b, and the third showcase 20c based on the acquired ambient temperature $T_a$, internal temperature $T_r1n$, internal temperature $T_r2n$ and internal temperature $T_r3n$, and Expression (1) indicating the read load (step S7).

Specifically, the load equation generating unit 403 substitutes the acquired ambient temperature $T_a$ and internal temperature $T_r1n$ in Expression (1) to generate the following Expression (6).

$$\text{Load} = L\times (T_a\text{-}T_r1n)+H \quad ... \ (6)$$

Expression (6) represents an equation indicating a load with respect to the first showcase 20a.

The load equation generating unit 403 substitutes the acquired ambient temperature $T_a$ and internal temperature $T_r2n$ in Expression (1) to generate the following Expression (7).

$$\text{Load} = L\times (T_a\text{-}T_r2n)+H \quad ... \ (7)$$

Expression (7) represents an equation indicating a load with respect to the second showcase 20b.

The load equation generating unit 403 substitutes the acquired ambient temperature $T_a$ and internal temperature $T_r3n$ in Expression (1) to generate the following Expression (8).

$$\text{Load} = L\times (T_a\text{-}T_r3n)+H \quad ... \ (8)$$

Expression (8) represents an equation indicating a load with respect to the third showcase 20c.

The load equation generating unit 403 outputs the generated Expression (6) to Expression (8) to the heat balance equation calculating unit 406.

The heat balance equation calculating unit 406 receives inputs of Expression (6) to Expression (8) from the load equation generating unit 403.

If the timing signal is input from the timer 402, the capacity equation generating unit 404 acquires each of the internal temperature $T_r11$ from the first showcase internal temperature sensor 201a, the internal temperature $T_r21$ from the second showcase internal temperature sensor 201b, and the internal temperature $T_r31$ from the third showcase internal temperature sensor 201c, at the timing tn when the timing signal is input (step S8). Further, the capacity equation generating unit 404 reads the initial values of the target evaporating temperatures $T_{es}$, the initial values of the air volumes v, and Expression (2) from the storage unit 401 (step S9).

The capacity equation generating unit 404 generates an expression indicating a capacity with respect to each of the first showcase 20a, the second showcase 20b, and the third showcase 20c, based on the acquired internal

temperature $T_r1n$, internal temperature $T_r2n$ and internal temperature $T_r3n$, the read initial values of the target evaporating temperatures $T_{es}$, initial values of the air volumes v, and Expression (2) indicating the capacity (step S10).

Specifically, the capacity equation generating unit 404 substitutes the acquired internal temperature $T_r1n$, the initial value of the target evaporating temperature $T_{es}$, and the initial value of the air volume v in Expression (2) to generate the following Expression (9).

$$\text{Capacity} = Q \times v \times (T_r1n - T_{es}) \qquad \dots (9)$$

Expression (9) represents an equation indicating a capacity with respect to the first showcase 20a.

The capacity equation generating unit 404 substitutes the acquired internal temperature $T_r2n$, the initial value of the target evaporating temperature $T_{es}$, and the initial value of the air volume v in Expression (2) to generate the following Expression (10).

$$\text{Capacity} = Q \times v \times (T_r2n - T_{es}) \qquad \dots (10)$$

Expression (10) represents an equation indicating a capacity with respect to the second showcase 20b.

The capacity equation generating unit 404 substitutes the acquired internal temperature $T_r3n$, the initial value of the target evaporating temperature $T_{es}$, and the initial value of the air volume v in Expression (2) to generate the following Expression (11).

$$\text{Capacity} = Q \times v \times (T_r3n - T_{es}) \qquad \dots (11)$$

Expression (11) represents an equation indicating a capacity with respect to the third showcase 20c.

The capacity equation generating unit 404 outputs the generated Expression (9) to Expression (11) to the heat balance equation calculating unit 406.

The heat balance equation calculating unit 406 receives inputs of Expression (9) to Expression (11) from the capacity equation generating unit 404.

If the timing signal is input from the timer 402, the internal temperature change equation generating unit 405 acquires the internal temperature $T_r1n$ from the first showcase internal temperature sensor 201a, the internal temperature $T_r2n$ from the second showcase internal temperature sensor 201b, and the internal temperature $T_r3n$ from the third showcase internal temperature sensor 201c, respectively, at the timing tn when the timing signal is input (step S11). Further, the internal temperature change equation generating unit 405 reads Expression (3) from the storage unit 401 (step S12).

The internal temperature change equation generating unit 405 generates an equation indicating change in internal temperature with respect to each of the first showcase 20a, the second showcase 20b, and the third showcase 20c, based on an internal temperature $T_r1(n-1)$, an internal temperature $T_r2(n-1)$, and internal temperature $T_r3(n-1)$ which are acquired at a timing t(n-1), and the internal temperature $T_r1n$, the internal temperature $T_r2n$, and the internal temperature $T_r3n$ which are acquired at the timing tn, and the read Expression (3) indicating change in internal temperature (step S13).

Specifically, the internal temperature change equation generating unit 405 substitutes the timing t(n-1), the internal temperature $T_r1(n-1)$ acquired at the timing t(n-1), the timing tn, and the internal temperature $T_r1n$ acquired at the timing tn in Expression (3) to generate the following Expression (12).

$$\text{Change in internal temperature} = \{M \times (T_r1n - T_r1(n-1))\}/(tn - t(n-1)) \qquad \dots (12)$$

Expression (12) represents an equation indicating change in internal temperature with respect to the first showcase 20a.

The internal temperature change equation generating unit 405 substitutes the timing t(n-1), the internal temperature $T_r2(n-1)$ acquired at the timing t(n-1), the timing tn, and the internal temperature $T_r2n$ acquired at the timing tn in Expression (3) to generate the following Expression (13).

$$\text{Change in internal temperature} = \{M \times (T_r2n - T_r2(n-1))\}/(tn - t(n-1)) \qquad \dots (13)$$

Expression (13) represents an equation indicating change in internal temperature with respect to the second showcase 20b.

The internal temperature change equation generating unit 405 substitutes the timing t(n-1), the internal temperature $T_r3(n-1)$ acquired at the timing t(n-1), the timing tn, and the internal temperature $T_r3n$ acquired at the timing tn in Expression (3) to generate the following Expression (14).

$$\text{Change in internal temperature} = \{M \times (T_r3n - T_r3(n-1))\}/(tn - t(n-1)) \quad \ldots (14)$$

Expression (14) represents an equation indicating change in internal temperature with respect to the third showcase 20c.

The internal temperature change equation generating unit 405 outputs the generated Expression (12) to Expression (14) to the heat balance equation calculating unit 406.

If Expression (12) to Expression (14) are input from the internal temperature change equation generating unit 405 (step S14), the heat balance equation calculating unit 406 determines whether the number of times of input of Expression (12) to Expression (14) is equal to or greater than four (step S15). For example, whenever Expression (12) to Expression (14) are input every timing tn when a predetermined time elapses, the heat balance equation calculating unit 406 determines whether $n \geq 4$. Specifically, for example, in the case of the timing t1 (n=1), if Expression (12) to Expression (14) are input, the heat balance equation calculating unit 406 determines whether n=1 satisfies $n \geq 4$.

If it is determined that the number of times of input of Expression (12) to Expression (14) from the internal temperature change equation generating unit 405 is not equal to or greater than four (step S15, NO), the heat balance equation calculating unit 406 adds 1 to n (step S16). Further, the heat balance equation calculating unit 406 returns to the process of step S4.

If it is determined that the number of times of input of Expression (12) to Expression (14) from the internal temperature change equation generating unit 405 is equal to or greater than four (step S15, YES), the heat balance equation calculating unit 406 calculates the load coefficient L, the inside-generated load H, the capacity coefficient per air volume Q, and the heat capacity coefficient M with respect to each of the first showcase 20a, the second showcase 20b, and the third showcase 20c based on the latest four timings tn, t(n-1), t(n-2), and t(n-3) (step S17), respectively.

The heat balance equation calculating unit 406 outputs the respectively calculated values of the load coefficient L, the inside-generated load H, the capacity coefficient per air volume Q, and the heat capacity coefficient M to the target evaporating temperature calculating unit 407.

The target evaporating temperature calculating unit 407 receives respective inputs of the load coefficient L, the inside-generated load H, the capacity coefficient per air volume Q, and the heat capacity coefficient M from the heat balance equation calculating unit 406. The target evaporating temperature calculating unit 407 substitutes the input values of the load coefficient L, the inside-generated load H, the capacity coefficient per air volume Q, and the heat capacity coefficient M in Expression (6) to Expression (8), respectively, to calculate a load with respect to each of the first showcase 20a, the second showcase 20b, and the third showcase 20c. The target evaporating temperature calculating unit 407 outputs the calculated loads to the correction air volume calculating unit 409. Further, the target evaporating temperature calculating unit 407 specifies a maximum load among the calculated loads (step S18). The target evaporating temperature calculating unit 407 calculates the target evaporating temperature $T_{es}$ based on the load coefficient L, the inside-generated load H, the capacity coefficient per air volume Q, and the heat capacity coefficient M with respect to the showcase corresponding to the specified maximum load (step S19). The target evaporating temperature calculating unit 407 outputs the calculated target evaporating temperature $T_{es}$ to the target low pressure specifying unit 408.

If the target evaporating temperature $T_{es}$ is input from the target evaporating temperature calculating unit 407, the target low pressure specifying unit 408 reads the data table TBL1 from the storage unit 401. The target low pressure specifying unit 408 specifies a target low pressure corresponding to the target evaporating temperature $T_{es}$ calculated at the timing tn based on the input target evaporating temperature $T_{es}$ and the read data table TBL1 (step S20). For example, the target low pressure specifying unit 408 compares a target evaporating temperature in the read data table TBL1 with the input target evaporating temperature $T_{es}$, and specifies a target low pressure corresponding to the target evaporating temperature that matches the input target evaporating temperature $T_{es}$ in the read data table TBL1 as the target low pressure corresponding to the target evaporating temperature $T_{es}$ calculated at the timing tn.

The target low pressure specifying unit 408 outputs the specified target low pressure to the correction air volume calculating unit 409, the condensing unit 50, and the fan control unit 60.

The correction air volume calculating unit 409 calculates correction values of air volumes in the showcases other than the showcase corresponding to the maximum load specified by the target evaporating temperature calculating unit 407 based on the loads input from the target evaporating temperature calculating unit 407 and the target low pressure input from the control value calculation device 40 (step S21). For example, if the showcase corresponding to the maximum load is the first showcase 20a, if the same control as in the first showcase 20a is performed with respect to the second showcase 20b and the third showcase 20c, excessive cooling occurs. Thus, the correction air volume calculating unit 409 calculates a correction value for reducing an air volume indicated by the input load of the second showcase 20b compared with an air volume corresponding to the input target low pressure, with respect to the second showcase 20b. Further, the correction air volume calculating unit 409 calculates a correction value for reducing an air volume indicated by the input load of the third showcase 20c compared with the air volume corresponding to the input target low pressure, with respect to the third showcase 20c.

The correction air volume calculating unit 409 outputs the calculated correction values to the fan control unit 60.

The condensing unit 50 controls the first evaporator 202a, the second evaporator 202b, and the third evaporator 202c, respectively, based on the target low pressure input from the control value calculation device 40 (step S22). For example, the condensing unit 50 controls a compressor in each of the first evaporator 202a, the second evaporator 202b, and the third evaporator 202c so that the input target low pressure is obtained.

The fan control unit 60 controls the first fan 203a, the second fan 203b, and the third fan 203c based on the target low pressure input from the control value calculation device 40. For example, the fan control unit 60 controls the rotational speed of each of the first fan 203a, the second fan 203b, and the third fan 203c based on the input target low pressure and correction values to control the air volumes, to thereby controlling the evaporating temperatures. The fan control unit 60 returns to the process of step S16.

Hereinbefore, the process of the control value calculation device 40 according to the first embodiment of the invention is described. According to the process of the control value calculation device 40 according to this embodiment, the load equation generating unit 403 generates a load equation indicating a load with respect to each of the first evaporator 202a, the second evaporator 202b, and the third evaporator 202c at four different timings. The capacity equation generating unit 404 generates a capacity equation indicating a capacity with respect to each of the first evaporator 202a, the second evaporator 202b, and the third evaporator 202c at four different timings. The internal temperature change equation generating unit 405 generates an internal temperature change equation indicating change in internal temperature in each of the first showcase 20a, the second showcase 20b, and the third showcase 20c respectively provided in the first evaporator 202a, the second evaporator 202b, and the third evaporator 202c at four different timings. The heat balance equation calculating unit 406 generates simultaneous equations indicating heat balance based on the load equations generated by the load equation generating unit 403, the capacity equations generated by the capacity equation generating unit 404, and the internal temperature change equations generated by the internal temperature change equation generating unit 405, and calculates the load coefficient L indicating a load per unit temperature, the inside-generated load H, the capacity coefficient Q indicating a capacity per unit temperature, and the heat capacity coefficient M indicating a heat capacity per unit temperature.

With this configuration, it is possible to determine an optimal target pressure with respect to change in load based on the load coefficient L, the inside-generated load H, the capacity coefficient Q indicating the capacity per unit temperature, and the heat capacity coefficient M indicating the heat capacity per unit temperature.

Further, the target evaporating temperature calculating unit 407 calculates a load with respect to each of the first showcase 20a, the second showcase 20b, and the third showcase 20c based on the respective values of the load coefficient L, the inside-generated load H, the capacity coefficient Q, and the heat capacity coefficient M calculated by the heat balance equation calculating unit 406, and calculates a target temperature based on respective values of the load coefficient L, the inside-generated load H, the capacity coefficient Q, and the heat capacity coefficient M corresponding to a maximum load among the calculated loads.

With this configuration, it is possible to calculate a target evaporating temperature (target temperature) based on the load coefficient L, the inside-generated load H, the capacity coefficient Q, and the heat capacity coefficient M corresponding to a maximum load. Further, by controlling the temperature in each of the showcases based on the target evaporating temperature, it is possible to perform an appropriate temperature control without rotating the fans more than a necessary rotational speed.

Further, the target low pressure specifying unit 408 specifies a target low pressure based on the target evaporating temperature calculated by the target evaporating temperature calculating unit 407 and a correspondence relationship between the target evaporating temperature and the target low pressure. The correction air volume calculating unit 409 calculates correction values of air volumes in showcases other than the showcase corresponding to the maximum load specified by the target evaporating temperature calculating unit 407 based on the target low pressure specified by the target low pressure specifying unit 408 and the load with respect to each of the showcases calculated by the target evaporating temperature calculating unit 407.

With this configuration, it is possible to control air volumes in showcases other than a showcase corresponding to a maximum load to appropriate air volumes, and to perform an appropriate temperature control without excessive cooling in an internal temperature.

Second embodiment

Next, a configuration of a refrigeration system 1 that includes a control value calculation device 40 according to a second embodiment of the invention will be described.

The refrigeration system 1 according to the first embodiment shown in FIG. 1 may be considered as a heating system by replacing temperature cooling with temperature heating.

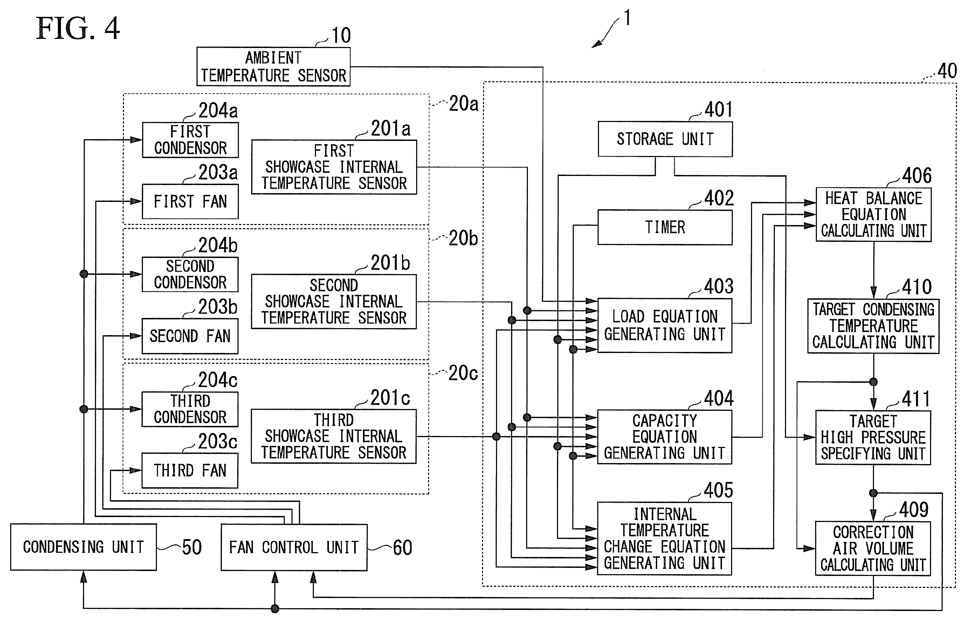

The refrigeration system 1 according to this embodiment including the control value calculation device 40 according to the second embodiment includes is configured, as shown in FIG. 4, by replacing the first evaporator 202a with a first condenser 204a (heat exchanger), by replacing the second evaporator 202b with a second condenser 204b (heat exchanger), by replacing the third evaporator 202c with a third condenser 204c (heat exchanger), by replacing the target evaporating temperature calculating unit 407 with a target condensing temperature calculating unit 410 (target temperature calculating unit), and by replacing the target low pressure specifying unit 408 with a target high pressure specifying unit 411 (control value calculating unit).

The first condenser 204a raises the temperature inside the first showcase 20a based on the control of the condensing unit 50. The first condenser 204a is a device that performs heating by giving heat to the periphery when a refrigerant liquid is condensed. Here, the first showcase 20a functions as a heater.

The second condenser 204b raises the temperature inside the second showcase 20b based on the control of the condensing unit 50. The second condenser 204b is a device that performs heating by giving heat to the periphery when a refrigerant liquid is condensed. The second showcase 20b functions as a heater.

The third condenser 204c raises the temperature inside the third showcase 20c based on the control of the condensing unit 50. The third condenser 204c is a device that performs heating by giving heat to the periphery when a refrigerant liquid is condensed. The third showcase 20c functions as a heater.

The target condensing temperature calculating unit 410 calculates a load with respect to each of the first showcase 20a, the second showcase 20b, and the third showcase 20c based on the respective input values of the load coefficient L, the inside-generated load H, the capacity coefficient per air volume Q, and the heat capacity coefficient M. The target condensing temperature calculating unit 410 (maximum load specifying unit) specifies a maximum load among the calculated loads. The target condensing temperature calculating unit 410 calculates a target condensing temperature $T_{es}$ based on the respective values of the load coefficient L, the inside-generated load H, the capacity coefficient per air volume Q, and the heat capacity coefficient M corresponding to the specified maximum load.

The target high pressure specifying unit 411 specifies a target high pressure (control value) based on the target condensing temperature $T_{es}$ calculated by the target condensing temperature calculating unit 410. For example, the target high pressure specifying unit 411 substitutes the target condensing temperature $T_{es}$ in a relational expression indicating a relationship between the target condensing temperature $T_{es}$ and the target high pressure to calculate the target high pressure. Further, for example, the target high pressure specifying unit 411 specifies a target condensing temperature that matches the target condensing temperature $T_{es}$ calculated by the target condensing temperature calculating unit 410 in a data table TBL2 indicating a correspondence relationship between the target condensing temperature $t_{es}$ and the target high pressure stored in the storage unit 401.

A process of the control value calculation device 40 included in the refrigeration system 1 according to this embodiment corresponds to the process of the control value calculation device 40 in the refrigeration system 1 according to the first embodiment except that evaporation is replaced with condensation, the target low pressure is replaced with the target high pressure, and "load-capacity" in Expression (4) is replaced with "capacity-load".

Hereinbefore, the process of the control value calculation device 40 according to the second embodiment of the invention is described. According to the process of the control value calculation device 40 according to this embodiment, the load equation generating unit 403 generates a load equation indicating a load with respect to each of the first condenser 204a, the second condenser 204b, and the third condenser 204c at four different timings. The capacity equation generating unit 404 generates a capacity equation indicating a capacity with respect to each of the first condenser 204a, the second condenser 204b, and the third condenser 204c at four different timings. The internal temperature change equation generating unit 405 generates an internal temperature change equation indicating change in internal temperature in each of the first showcase 20a, the second showcase 20b, and the third showcase 20c respectively provided in the first condenser 204a, the second condenser 204b, and the third condenser 204c at four different timings. The heat balance equation calculating unit 406 generates simultaneous equations indicating heat balance based on the load equations generated by the load equation generating unit 403, the capacity equations generated by the capacity equation generating unit 404, and the internal temperature change equations generated by the internal temperature change equation generating unit 405, and calculates the load coefficient L indicating a load per unit temperature, the inside-generated load H, the capacity coefficient Q indicating a capacity per unit temperature, and the heat capacity coefficient M indicating a heat capacity per unit temperature.

With this configuration, it is possible to determine an optimal target pressure with respect to change in load based on the load coefficient L, the inside-generated load H, the capacity coefficient Q indicating the capacity per unit temperature, and the heat capacity coefficient M indicating the heat capacity per unit temperature.

Further, the target condensing temperature calculating unit 410 calculates a load with respect to each of the first showcase 20a, the second showcase 20b, and the third showcase 20c based on the respective values of the load coefficient L, the inside-generated load H, the capacity coefficient Q, and the heat capacity coefficient M calculated by the heat balance equation calculating unit 406, and calculates a target temperature based on respective values of the load coefficient L, the inside-generated load H, the capacity coefficient Q, and the heat capacity coefficient M corresponding to a maximum load among the calculated loads.

With this configuration, it is possible to calculate a target condensing temperature (target temperature) based on the load coefficient L, the inside-generated load H, the capacity coefficient Q, and the heat capacity coefficient M corresponding to a maximum load. Further, by controlling the temperature in each of the showcases based on the target condensing temperature, it is possible to perform an appropriate temperature control without rotating the fans more than a necessary rotational speed.

Further, the target high pressure specifying unit 411 specifies a target high pressure based on the target condensing temperature calculated by the target condensing temperature calculating unit 410 and a correspondence relationship between the target condensing temperature and the target high pressure. The correction air volume calculating unit 409 calculates correction values of air volumes in showcases other than the showcase corresponding to the maximum load specified by the target condensing temperature calculating unit 410 based on the target high pressure specified by the target high pressure specifying unit 411 and the load with respect to each of the showcases calculated by the target condensing temperature calculating unit 410.

With this configuration, it is possible to control air volumes in showcases other than a showcase corresponding to a maximum load to appropriate air volumes, and to perform an appropriate temperature control without excessively cooling in an internal temperature.

The storage unit 401 in the embodiment of the invention may be provided in any place in a range where transmission and reception of information are appropriately performed. Further, the storage unit 401 may be present in multiple places in a range where transmission and reception of information are appropriately performed to distribute data for storage.

In the processing flow in the embodiments of the invention, the order of processes may be changed in a range where an appropriate process is performed.

The embodiments of the invention have been described, but the control value calculation device 40 includes a computer system therein. Further, a routine of the above-described processes is stored on a computer-readable recording medium in a program format, and a computer reads and executes the program to perform the processes. Here, the computer-readable recording medium refers to a magnetic disc, a magneto-optical disc, a CD-ROM, a DVD-ROM, a semiconductor memory, or the like. Further, the computer program may be transmitted to the computer through a communication line, and the computer that receives the transmission may execute the program.

The program may realize part of the above-described functions. Further, the program may be a file capable of realizing the above-described functions in combination with a program that is recorded in advance in the computer system, so-called a differential file (differential program).

**Claims**

1. A control value calculation device (40) **characterized by** comprising:

   a heat balance equation calculating unit (406) configured to calculate a heat balance equation based on a plurality of relational expressions, the relational expressions respectively corresponding to different timings, the relational expressions showing correspondence relationships between a load with respect to a temperature control device (20a; 20b; 20c) in a compartment, a capacity of the temperature control device (20a; 20b; 20c), and change in a temperature in the compartment by the temperature control device (20a; 20b; 20c), the heat balance equation showing balance when the temperature control device (20a; 20b; 20c) performs heat exchange in the compartment, the heat balance equation being expressed by relationships between a control value of the temperature control device (20a; 20b; 20c), a target value of the temperature in the compartment, a value of a temperature outside the compartment, and a constant specified based on the relational expressions; and
   a control value calculating unit (408; 411) that calculates the control value of the temperature control device (20a; 20b; 20c) based on the heat balance equation and a current target value of the temperature in the compartment.

2. The control value calculation device (40) according to claim 1,

**EP 3 073 348 A1**

wherein the temperature control device (20a; 20b; 20c) is a refrigerator, and
wherein the control value is a target low pressure for determining a pressure of a refrigerant in an evaporator of the compartment.

3. The control value calculation device (40) according to claim 1 or 2,

wherein the correspondence relationships includes load coefficient indicating the load per unit time, an inside-generated load, a capacity coefficient indicating a capacity per unit temperature, and a heat capacity coefficient indicating a heat capacity per unit temperature, and
wherein the heat balance equation calculating unit (406) calculates the load coefficient, the inside-generated load, the capacity coefficient, and the heat capacity coefficient, based on the correspondence relationships and the heat balance equation.

4. The control value calculation device (40) according to any one of claims 1 to 3,

wherein the compartment includes a plurality of compartments, and
wherein the control value calculation device (40) further comprises:

a maximum load specifying unit that specifies a load that is a heaviest load among loads in the compartments, in a case where the control device controls each of the compartments,
wherein the control value calculating unit (408; 411) calculates the control value with respect to the heaviest load.

5. The control value calculation device (40) according to claim 4, further comprising:

a correction air volume calculating unit (409) that determines a rotational speed of a fan (203a; 203b; 203c) in each of the compartments other than the compartment having the heaviest load, based on a difference between the heaviest load and the load in each of the compartments other than the compartment having the heaviest load.

6. A control value calculation method **characterized by** comprising:

calculating a heat balance equation based on a plurality of relational expressions, the relational expressions respectively corresponding to different timings, the relational expressions showing correspondence relationships between a load with respect to a temperature control device (20a; 20b; 20c) in a compartment, a capacity of the temperature control device (20a; 20b; 20c), and change in a temperature in the compartment, the heat balance equation showing balance when the temperature control device (20a; 20b; 20c) performs heat exchange in the compartment, the heat balance equation being expressed by relationships between a control value of the temperature control device (20a; 20b; 20c), a target value of the temperature in the compartment, a temperature outside the compartment, and a constant specified based on the relational expressions; and
calculating the control value of the temperature control device based on the heat balance equation and a current target value of the temperature in the compartment.

7. A computer readable medium storing instructions thereon that when executed by a computer cause the computer to perform a method **characterized by** comprising:

calculating a heat balance equation based on a plurality of relational expressions, the relational expressions respectively corresponding to different timings, the relational expressions showing correspondence relationships between a load with respect to a temperature control device (20a; 20b; 20c) in a compartment, a capacity of the temperature control device (20a; 20b; 20c), and change in a temperature in the compartment, the heat balance equation showing balance when the temperature control device (20a; 20b; 20c) performs heat exchange in the compartment, the heat balance equation showing being expressed by a relationships between a control value of the temperature control device, a target value of the temperature in the compartment, a temperature outside the compartment, and a constant specified based on the relational expressions; and
calculating the control value of the temperature control device based on the heat balance equation and a current target value of the temperature in the compartment.

FIG. 1

FIG. 2

TBL1

| TARGET EVAPORATING TEMPERATURE $T_{es}$ | TARGET LOW PRESSURE |
|---|---|
| TARGET EVAPORATING TEMPERATURE $T_{es}1$ | TARGET LOW PRESSURE P1 |
| TARGET EVAPORATING TEMPERATURE $T_{es}2$ | TARGET LOW PRESSURE P2 |
| . . . | . . . |

## FIG. 3

```
           START
             │
             ▼
      RESET TIME                              ～S1

             ▼
   OUTPUT TIMER-ZERO-SIGNAL                   ～S2

             ▼
      ACQUIRE INTERNAL                        ～S3
     TEMPERATURE AT t0

             ▼
      OUTPUT TIMING SIGNAL                    ～S4

             ▼
  ACQUIRE AMBIENT TEMPERATURE                 ～S5
  AND INTERNAL TEMPERATURE AT tn

             ▼
     READ LOAD EQUATION                       ～S6

             ▼
    GENERATE LOAD EQUATION                    ～S7
    OF EACH SHOWCASE AT tn

             ▼
      ACQUIRE INTERNAL                        ～S8
     TEMPERATURE AT tn

             ▼
  READ INITIAL VALUES OF TARGET
  EVAPORATING TEMPERATURES,                   ～S9
  INITIAL VALUES OF AIR VOLUMES,
  AND CAPACITY EQUATION

             ▼
  GENERATE CAPACITY EQUATION                  ～S10
    OF EACH SHOWCASE AT tn

             ▼
      ACQUIRE INTERNAL                        ～S11
     TEMPERATURE AT tn

             ▼
  READ INTERNAL TEMPERATURE                   ～S12
      CHANGE EQUATION
```

```
     GENERATE INTERNAL
  TEMPERATURE CHANGE EQUATION                 ～S13
    OF EACH SHOWCASE AT tn

             ▼
     INPUT LOAD EQUATION,
  CAPACITY EQUATION, AND INTERNAL             ～S14
  TEMPERATURE CHANGE EQUATION
    OF EACH SHOWCASE AT tn

             ▼                    ～S15
          ◇ n≧4? ◇    NO
             │ YES
             ▼
  CALCULATE LOAD COEFFICIENT,
  INSIDE-GENERATED LOAD,                      ～S17
  CAPACITY COEFFICIENT PER
  AIR VOLUME, AND HEAT
  CAPACITY COEFFICIENT AT tn

             ▼
  SPECIFY MAXIMUM LOAD AT tn                  ～S18

             ▼
  CALCULATE TARGET EVAPORATING                ～S19
     TEMPERATURE AT tn

             ▼
     SPECIFY TARGET                           ～S20
   LOW PRESSURE AT tn

             ▼
  CALCULATE CORRECTION VALUE                  ～S21

             ▼
     CONTROL EVAPORATOR                       ～S22

             ▼
       CONTROL FAN                            ～S23

             ▼
          n=n+1                               ～S16
```

15

FIG. 4

Europäisches
Patentamt

European
Patent Office

Office européen
des brevets

# EUROPEAN SEARCH REPORT

Application Number

EP 16 16 2044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 175 212 A1 (DAIKIN IND LTD [JP]) 14 April 2010 (2010-04-14) | 1,2,6,7 | INV. G05D23/19 |
| Y | * the whole document * | 3-5 | |
| Y | US 5 400 963 A (ISHIKAWA TOSHIKAZU [JP] ET AL) 28 March 1995 (1995-03-28) * the whole document * | 1-7 | |
| Y | EP 2 767 779 A1 (DAIKIN IND LTD [JP]) 20 August 2014 (2014-08-20) * the whole document * | 1-7 | |
| Y | CHO H ET AL: "Performance of a showcase refrigeration system with multi-evaporator during on-off cycling and hot-gas bypass defrost", ENERGY, PERGAMON PRESS, OXFORD, GB, vol. 30, no. 10, 1 July 2005 (2005-07-01), pages 1915-1930, XP027750661, ISSN: 0360-5442 [retrieved on 2005-07-01] * the whole document * | 1-7 | TECHNICAL FIELDS SEARCHED (IPC) G05D |

The present search report has been drawn up for all claims

| Place of search | Date of completion of the search | Examiner |
|---|---|---|
| Munich | 22 July 2016 | Lalinde, Rafael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 2044

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2016

| Patent document cited in search report | | Publication date | Patent family member(s) | | Publication date |
|---|---|---|---|---|---|
| EP 2175212 | A1 | 14-04-2010 | AU | 2008272365 A1 | 08-01-2009 |
| | | | CN | 101688700 A | 31-03-2010 |
| | | | EP | 2175212 A1 | 14-04-2010 |
| | | | JP | 2009014210 A | 22-01-2009 |
| | | | KR | 20100036345 A | 07-04-2010 |
| | | | US | 2010175400 A1 | 15-07-2010 |
| | | | WO | 2009004761 A1 | 08-01-2009 |
| US 5400963 | A | 28-03-1995 | US | 5400963 A | 28-03-1995 |
| | | | US | 5603226 A | 18-02-1997 |
| EP 2767779 | A1 | 20-08-2014 | AU | 2012317307 A1 | 01-05-2014 |
| | | | CN | 103958985 A | 30-07-2014 |
| | | | EP | 2767779 A1 | 20-08-2014 |
| | | | JP | 5370560 B2 | 18-12-2013 |
| | | | JP | 2013083435 A | 09-05-2013 |
| | | | US | 2014245764 A1 | 04-09-2014 |
| | | | WO | 2013047828 A1 | 04-04-2013 |

EPO FORM P0459

For more details about this annex : see Official Journal of the European Patent Office, No. 12/82

**EP 3 073 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP 2003083660 A